# EUROPÄISCHE PATENTSCHRIFT

(11) **EP 1 927 824 B1**
(45) Veröffentlichungstag und Bekanntmachung des Hinweises auf die Patenterteilung: **12.08.2009**
(21) Anmeldenummer: 07019987.2
(22) Anmeldetag: 12.10.2007
(51) Int. Cl.: G01D 5/20

(54) **Drehgeber**
Rotary encoder
Encodeur

(30) Priorität: 28.11.2006 DE 102006056461
(43) Veröffentlichungstag der Anmeldung: 04.06.2008
(73) Patentinhaber: Dr. Johannes Heidenhain GmbH, 83301 Traunreut (DE)
(72) Erfinder: Brandl, Alois, 83313 Siegsdorf (DE)

(56) Entgegenhaltungen:
- DE-A1- 19 751 853
- DE-U1- 9 218 383
- US-A1- 2005 000 580

## Beschreibung

Die Erfindung betrifft einen Drehgeber zur Bestimmung von Relativwinkelpositionen gemäß dem Anspruch 1.

Derartige Drehgeber werden häufig zur Bestimmung der Winkellage zweier relativ zueinander drehbaren Maschinenteile verwendet und arbeiten beispielsweise nach einem induktiven Messprinzip. Bei induktiven Drehgebern werden Erregerspulen und Empfängerspulen etwa in Form von Leiterbahnen auf einer gemeinsamen Leiterplatte aufgebracht, die beispielsweise mit einem Stator des Drehgebers fest verbunden ist. Dieser Leiterplatte gegenüber befindet sich in definiertem axialen Abstand und zentriert eine weitere Platine, die als Codescheibe ausgebildet ist, auf der in periodischen Abständen alternierend elektrisch leitfähige und nichtleitfähige Flächen als Teilungsbereich bzw. Teilungsstruktur aufgebracht sind, und welche mit dem Rotor des Drehgebers drehfest verbunden ist. Wenn an den Erregerspulen ein zeitlich wechselndes elektrisches Erregerfeld angelegt wird, werden in den Empfängerspulen während der Relativdrehung zwischen Rotor und Stator von der Winkellage abhängige Signale erzeugt. Diese Signale werden dann in einer Auswerteelektronik weiterverarbeitet.

Häufig werden solche Drehgeber als Messgeräte für elektrische Antriebe, zur Bestimmung der absoluten Winkellage von entsprechenden Antriebswellen, eingesetzt.

Aus dem Gebrauchsmuster DE 92 18 383 U1 ist eine Klemmkupplung bekannt, bei der eine Betätigungsschraube direkt auf einen Ring drückt, so dass über konische Flächen Klemmkräfte erzeugbar sind. Die vorbekannte Anordnung hat den Nachteil, dass auf Grund der dort vorherrschenden geometrischen Verhältnisse die Klemmkräfte vergleichsweise klein sind.

Der Erfindung liegt daher die Aufgabe zu Grunde, einen Drehgeber zu schaffen, bei dem eine Erhöhung der Klemmkräfte zwischen einer zu messenden Welle und der Drehgeberwelle auf einfache Weise erreichbar ist.

Diese Aufgabe wird erfindungsgemäß durch die Merkmale des Anspruches 1 gelöst.

Demgemäß umfasst der Drehgeber eine erste Bauteilgruppe und eine zweite Bauteilgruppe, wobei die Bauteilgruppen relativ um eine Achse zueinander drehbar angeordnet sind. Die erste Bauteilgruppe weist eine Detektoranordnung auf. Die zweite Bauteilgruppe umfasst eine Codescheibe und eine Welle mit einer zentralen Bohrung, einen Absatz und einen Steg mit einer Außenfläche. Weiterhin umfasst die zweite Bauteilgruppe einen Ringkörper mit einer Innenfläche und einem Betätigungsmittel, sowie ein Bauteil, welches zwischen der Außenfläche und der Innenfläche des Ringkörpers angeordnet ist. Dabei ist die Codescheibe von der Detektoranordnung zur Bestimmung der relativen Winkellage der beiden Bauteilgruppen zueinander abtastbar. Sowohl Punkte auf der Innenfläche des Ringkörpers als auch Punkte auf der Außenfläche der Welle weisen unterschiedliche Abstände zur Achse auf, so dass durch das Betätigungsmittel sich der Ringkörper derart auf dem Absatz abstützt, dass über das Bauteil eine Kraft mit einer radialen Richtungskomponente auf den Steg einwirkt, so dass ein in die Bohrung der Welle eingeführtes Maschinenteil klemmbar ist. Insbesondere kann das in die Bohrung der Welle eingeführte Maschinenteil etwa eine Welle eines Motors sein, deren Winkelstellung gemessen werden soll.

Mit Vorteil ist der Drehgeber geometrisch so ausgestaltet, dass durch das Betätigungsmittel sich der Ringkörper derart auf dem Absatz abstützt, dass in den Ringkörper eine Reaktionskraft in eine y-Richtung, welche eine Richtungskomponente parallel zur Achse aufweist, eingeleitet wird. Dabei weist das Bauteil einen ebenen Querschnitt auf, wobei in der Ebene des Querschnitts ein erster Punkt auf der Außenfläche der Welle definierbar ist. Ausgehend vom Querschnitt, bzw. von der Ebene des Querschnitts ist weiterhin entgegen der y-Richtung ein erster Punkt auf der Innenfläche des Ringkörpers definierbar. Ferner sind ausgehend vom Querschnitt in y-Richtung ein zweiter Punkt auf der Innenfläche des Ringkörpers sowie ein zweiter Punkt auf der Außenfläche der Welle definierbar. Der Abstand des ersten Punkts auf der Innenfläche zur Achse ist dabei kleiner als der Abstand des zweiten Punkts auf der Innenfläche zur Achse. Weiterhin ist der Abstand zur Achse des ersten Punkts auf der Außenfläche kleiner ist als der Abstand des zweiten Punkts auf der Außenfläche.

Insbesondere ist es vorteilhaft, wenn die Innenfläche des Ringkörpers konisch ausgestaltet ist und / oder wenn die Außenfläche der Welle konisch ausgestaltet ist.

Durch Drehgeber mit einer derartigen Bauweise können konstruktionsbedingt auf das zu klemmende Maschinenteil vergleichsweise hohe Klemmkräfte einwirken, da einerseits der Angriffspunkt der radial zur Achse hin wirkenden Kraft axial weit beabstandet vom Ansatz bzw. der Wurzel des Stegs liegt und andererseits der Steg mit Vorteil so ausgestaltet ist, dass dieser am Ansatz sehr dünnwandig ist. Entsprechend werden durch die so erreichten Hebelverhältnisse hohe Biegemomente über das Bauteil eingeleitet, bei einem vergleichsweise kleinen Widerstandsmoment bzw. großer Biegeweichheit des Stegs in radialer Richtung. Die Biegeweichheit des Stegs in radialer Richtung kann durch zumindest einen Schlitz, dessen Orientierung eine axiale Richtungskomponente aufweist, erhöht werden.

Mit Vorteil ist das Bauteil, welches zwischen der Außenfläche der Welle und der Innenfläche des Ringkörpers angeordnet ist, ein Sprengring.

In weiterer Ausgestaltung der Erfindung weist die Welle eine - insbesondere umlaufende - Nut zur Abstützung und Fixierung des Bauteils auf.

Mit Vorteil ist das Betätigungsmittel als eine Schraube oder ein Gewindestift in Wirkverbindung mit einem Gewinde bzw. einer Gewindebohrung am Ringkörper ausgestaltet.

Gemäß einer vorteilhaften Variante ist der Drehgeber so ausgestaltet, dass dieser nach einem induktiven Messprinzip arbeitet und insbesondere eine Leiterplatte mit Erreger- und Empfängerleiterbahnen als Detektoranordnung aufweist. Ferner kann dann die Codescheibe alternierend angeordnete, elektrisch leitfähige und nichtleitfähige Teilungsbereichen aufweisen.

Vorteilhafte Ausbildungen der Erfindung entnimmt man den abhängigen Ansprüchen.

Weitere Einzelheiten und Vorteile des erfindungsgemäßen Drehgebers ergeben sich aus der nachfolgenden Beschreibung eines Ausführungsbeispiels anhand der beiliegenden Figuren.

Es zeigen die
- Figur 1: eine perspektivische Schnitt-Ansicht durch einen Drehgeber gemäß dem Ausführungsbeispiel,
- Figur 2: eine Draufsicht auf den Drehgeber ohne Ringkörper,
- Figur 3: eine Detailansicht auf eine Transportsicherungsanordnung,
- Figur 4: eine Teilschnittdarstellung eines Bereichs der Transportsicherungsanordnung,
- Figur 5a: eine Schnittdarstellung durch den Drehgeber,
- Figur 5b: eine Draufsicht auf den Drehgeber mit Ringkörper,
- Figur 6: eine Teilschnittdarstellung des Drehgebers.

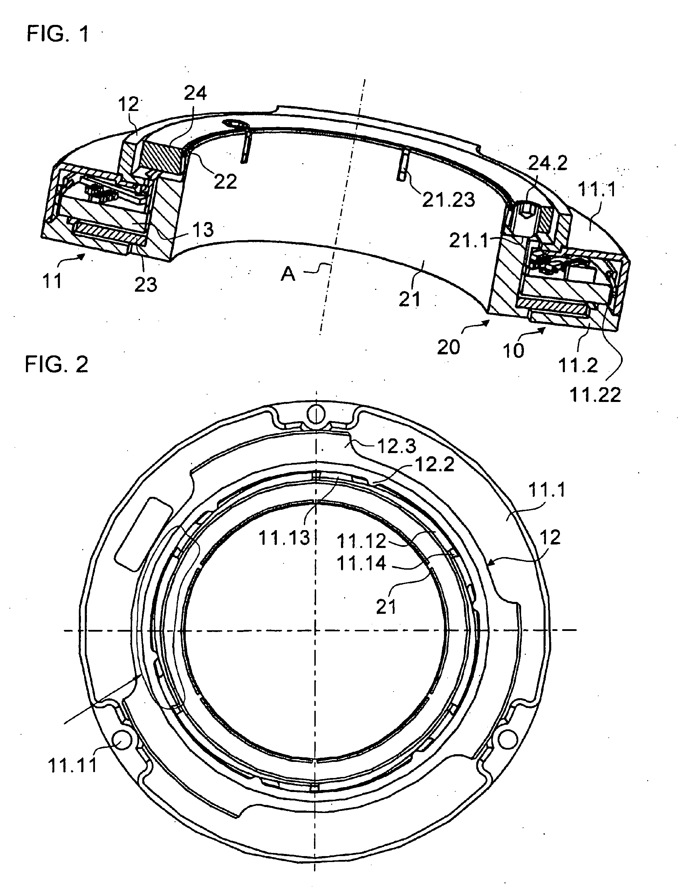

In der Figur 1 ist eine Schnittdarstellung durch einen Drehgeber gemäß einem Ausführungsbeispiel dargestellt. Der Drehgeber umfasst demnach eine erste Bauteilgruppe, hier in der Funktion eines Stators 10, und eine zweite Bauteilgruppe, hier als ein Rotor 20 wirkend. Rotor 20 und Stator 10 sind in einem Messbetrieb um eine Achse A relativ zueinander drehbar angeordnet.

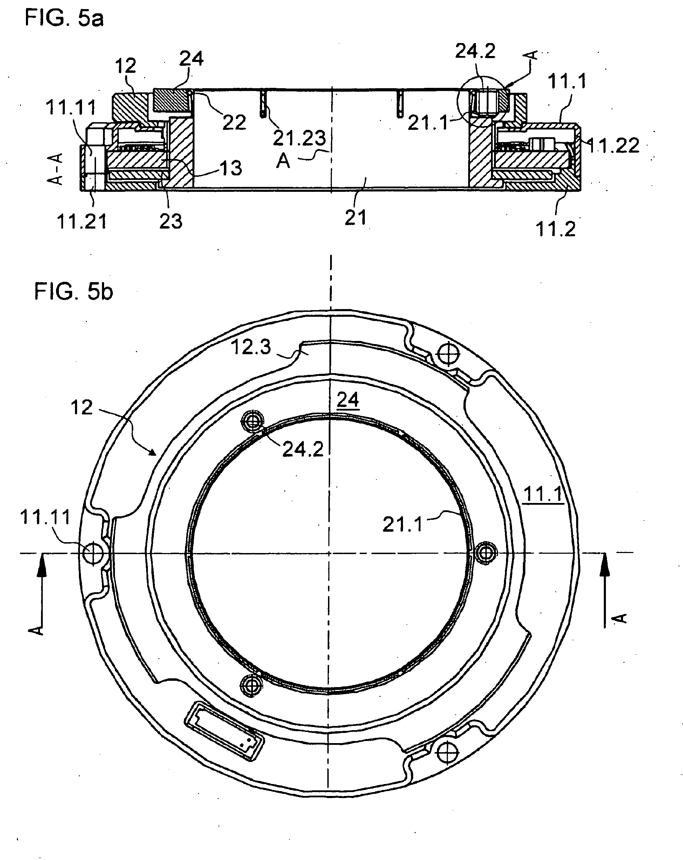

Der Stator 10 umfasst ein zweiteiliges Gehäuse 11, welches aus einem in der Figur 1 oberen ersten Gehäuseteil 11.1 und einem unteren zweiten Gehäuseteil 11.2 besteht. Mit Hilfe von Bohrungen 11.11, 11.21 (Fig. 5a) kann der Stator 10 beispielsweise an einem Gehäuse eines Motors festgelegt werden. Im vorgestellten Ausführungsbeispiel arbeitet der Drehgeber nach einem induktiven Messprinzip. Entsprechend ist am Stator 10 eine Detektoranordnung in Form einer Leiterplatte 13 angeordnet und über eine Bördelung 11.22 drehfest mit dem zweiten Gehäuseteil 11.2 verbunden.

In der DE 197 51 853 A1 ist beispielsweise das Funktionsprinzip eines induktiv arbeitenden Drehgebers erläutert. Auf der Leiterplatte 13 sind als Empfängerspulen in einer inneren Empfängerspur Empfängerleiterbahnen und in einer äußeren Empfängerspur weitere Empfängerleiterbahnen angeordnet. Darüber hinaus sind als Erregerspulen an der Leiterplatte 13 Erregerleiterbahnen vorgesehen, welche auf einer inneren, einer mittleren und einer äußeren Erregerspur aufgebracht sind. Die Leiterplatte 13 selbst weist eine zentrische Bohrung auf und ist mehrlagig ausgeführt.

Der Rotor 20 umfasst im vorgestellten Ausführungsbeispiel eine Welle, welche als Hohlwelle 21 ausgestaltet ist. In die zentrale Bohrung der Hohlwelle 21 kann beispielsweise eine Motorwelle eingeführt und festgelegt werden, um durch den Drehgeber die relative Winkellage dieser Motorwelle zum Gehäuse des Motors zu ermitteln. Die Hohlwelle 21 ist ein rotationssymmetrischer Körper und umfasst einen Absatz 21.1 und einen vergleichsweise dünnwandigen Steg 21.2. Der Steg 21.2 weist seinerseits eine Nut 21.21, eine auf die Radialrichtung bezogene konische Außenfläche 21.22, sowie Schlitze 21.23 auf.

Ferner ist am Rotor 20, insbesondere an dessen Hohlwelle 21, eine ringförmige Codescheibe 23 drehfest festgelegt. Die Codescheibe 23 besteht aus einem Substrat, welches im dargestellten Ausführungsbeispiel aus Epoxydharz hergestellt ist und auf dem zwei Teilungsspuren angeordnet sind. Die Teilungsspuren sind kreisringförmig ausgebildet und bezüglich der Achse A konzentrisch mit unterschiedlichem Durchmesser auf dem Substrat angeordnet. Die beiden Teilungsspuren bestehen jeweils aus einer periodischen Abfolge von alternierend angeordneten elektrisch leitfähigen Teilungsbereichen und nichtleitfähigen Teilungsbereichen. Als Material für die elektrisch leitfähigen Teilbereiche wurde im gezeigten Beispiel Kupfer auf das Substrat aufgebracht. In den nichtleitfähigen Teilungsbereichen wurde das Substrat dagegen nicht beschichtet. Die innere Teilungsspur besteht in der dargestellten Ausführungsform aus einem ersten halbringförmigen Teilungsbereich mit elektrisch leitfähigem Material, hier Kupfer, sowie einem zweiten halbringförmigen Teilungsbereich, in dem kein leitfähiges Material angeordnet ist. Radial benachbart zur ersten Teilungsspur liegt die zweite Teilungsspur auf dem Substrat, wobei auch die Teilungsspur aus einer Vielzahl elektrisch leitfähiger Teilungsbereiche sowie dazwischen angeordneten nichtleitfähigen Teilungsbereichen besteht. Die verschiedenen Teilungsbereiche sind materialmäßig dabei ebenso ausgebildet wie die Teilungsbereiche der ersten Teilungsspur. Insgesamt umfasst die zweite Teilungsspur im dargestellten Ausführungsbeispiel zweiunddreißig periodisch angeordnete, elektrisch leitfähige Teilungsbereiche sowie entsprechend zweiunddreißig dazwischen angeordnete nichtleitfähige Teilungsbereiche.

Die Codescheibe 23 und die Leiterplatte 13 liegen mit axialem Abstand einander gegenüber, so dass die Achse A durch die Mittelpunkte der Codescheibe 23 und der Leiterplatte 13 verläuft und bei einer Relativdrehung zwischen der Codescheibe 23 und der Leiterplatte 13 in der Leiterplatte 13 ein von der jeweiligen Winkelstellung abhängiges Signal durch Induktionseffekte erzeugbar ist. Nach diesem Messprinzip ist die Codescheibe 23 von der Leiterplatte 13 zur Bestimmung der relativen Winkellage des Rotors 20 und des Stators 10 zueinander im Messbetrieb abtastbar.

Vorraussetzung für die Bildung von entsprechenden Signalen ist, dass die Erregerleiterbahnen ein zeitlich wechselndes elektromagnetisches Erregerfeld im Bereich der Abtastspuren bzw. im Bereich der damit abgetasteten Teilungsspuren erzeugen. Im dargestellten Ausführungsbeispiel sind die Erregerleiterbahnen als mehrere planar-parallele stromdurchflossene Einzel-Leiterbahnen ausgebildet. Werden die Erregerleiterbahnen einer Leiterbahneinheit allesamt in der gleichen Richtung von Strom durchflossen, so bildet sich um die jeweilige Leiterbahneinheit ein schlauch- bzw. zylinderförmig orientiertes elektromagnetisches Feld aus. Die Feldlinien des resultierenden elektromagnetischen Feldes verlaufen in Form konzentrischer Kreise um die Leiterbahneinheiten, wobei die Richtung der Feldlinien in bekannter Art und Weise von der Stromrichtung in den Leiterbahneinheiten abhängt.

Bevor jedoch der Messbetrieb aufgenommen werden kann, muss der axiale Abstand zwischen der Codescheibe 23 und der Leiterplatte 13 möglichst genau justiert werden. Der vorgestellte Drehgeber verfügt über keine eigene Lagerung, ist also lagerlos ausgestaltet, so dass die Codescheibe 23 und Leiterplatte 13 vor der Montage an der Motorwelle und am Gehäuse des Motors zueinander axial und in geringem Umfang auch radial verschieblich sind. Andererseits sind gerade im Zusammenhang mit dem induktiven Messprinzip ein richtiger axialer Abstand und eine gute Zentrierung maßgebend für die Größe der Signalamplituden, und damit für die Güte des Messergebnisses. Aus diesem Grund wird im gezeigten Ausführungsbeispiel beim Hersteller des Drehgebers bereits eine optimale Justierung des axialen Abstands und der relativen Zentrizität zwischen der Codescheibe 23 und der Leiterplatte 13 vorgenommen und danach die Codescheibe 23 und die Leiterplatte 13 relativ zueinander arretiert, so dass auch während des Transportes zum Betreiber des Drehgebers diese Justierung nicht verloren geht. Im Zuge der Montage des Drehgebers wird zuletzt die Arretierung wieder gelöst, wobei im Messbetrieb dann ein optimierter axialer Abstand und eine optimierte Zentrierung gegeben ist.

Zum Zweck der Arretierung umfasst der Drehgeber einen Klemmring 12 aus Kunststoff mit einer Führungsfläche 12.1, Nocken 12.2, radialen Vorsprüngen 12.3 und Clipnasen 12.4. Ferner weist das erste Gehäuseteil 11.1 gebogene keilförmige Elemente 11.12 auf, die, über einen Steg 11.13 mit dem Hauptkörper des ersten Teils 11.1 verbunden sind. Die gebogenen keilförmigen Elemente 11.12 weisen radial außen konvexe Oberflächen auf und radial innen konkave. Durch Schlitze 11.14 sind die gebogenen keilförmigen Elemente 11.12 in Umfangsrichtung voneinander beabstandet und radial zueinander beweglich. Das erste Gehäuseteil 11.1 mit all seinen Komponenten, insbesondere den keilförmigen Elementen 11.12, ist einstückig als ein Spritzgussteil aus Kunststoff hergestellt.

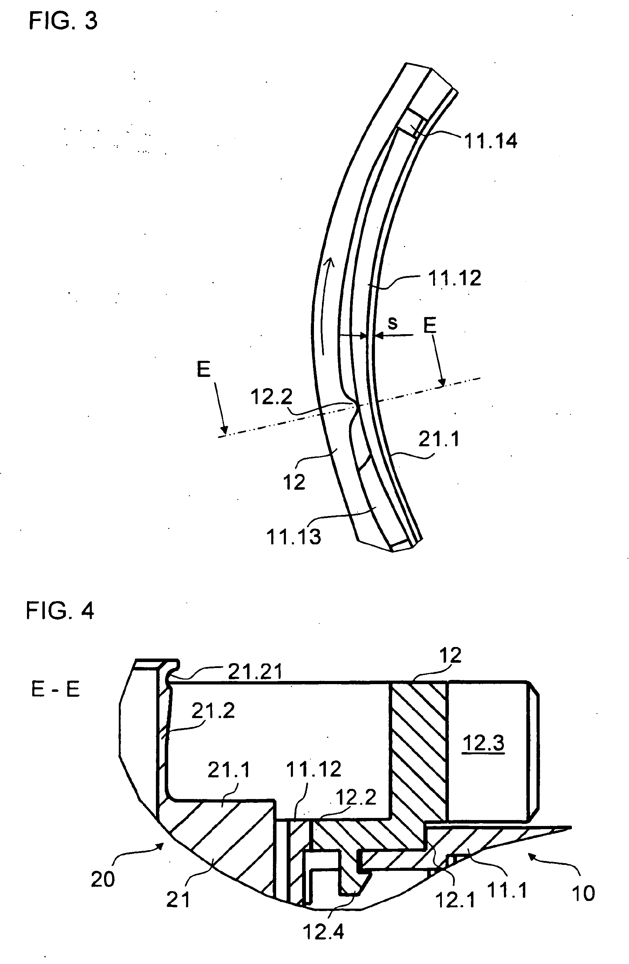

Der Klemmring 12 wird gemäß der Figur 4 beim Hersteller vor einer Justierung zunächst an das erste Gehäuseteil 11.1 mit der Clip-Verbindung lösbar verbunden und zwar in einer Stellung, in der die Nocken 12.2 die keilförmige Elemente 11.12 in ihren radial schmalen Bereichen berühren (Figur 3). Entsprechend liegt ein Luftspalt s zwischen der Hohlwelle 21 und den keilförmigen Elementen 11.12 vor, so dass der Rotor 20 relativ zum Stator 10 drehbar und in gewissen Grenzen axial verschiebbar ist. Als nächstes wird dann die Hohlwelle 21 relativ zum Gehäuse 11 axial verschoben, bis ein an den Drehgeber angeschlossenes Prüfgerät eine optimale Signalqualität meldet. Entsprechend ist dann der axiale Abstand zwischen der Codescheibe 23 und der Leiterplatte 13 optimal justiert.

In diesem Zustand wird dann der Klemmring 12 gemäß der Fig. 3 im Uhrzeigersinn relativ zum ersten Gehäuseteil 11.1 verdreht, wobei zur besseren Bedienbarkeit an den radialen Vorsprüngen 12.3 angegriffen werden kann. Diese Drehbewegung hat zur Folge, dass die Nocken 12.2 die keilförmigen Elemente 11.12 radial nach innen drücken, da diese radial nachgiebig ausgestaltet sind. Zur Erhöhung der Elastizität der keilförmigen Elemente 11.12 sind entsprechende Schlitze 11.14 vorgesehen. Auf diese Weise wird der Luftspalt s auf Null reduziert und die keilförmigen Elemente 11.12 klemmen den Stator 10 am Rotor 20, so dass eine relative axiale Verschieblichkeit unterbunden ist. Gleichzeitig erfolgt durch die allseitig symmetrische Krafteinleitung auf die Hohlwelle 21 automatisch eine Zentrierung der Codescheibe 23 relativ zur Leiterplatte 13.

Zu beachten ist in diesem Zusammenhang, dass der Bereich der Hohlwelle 21 an dem die konkaven Bereiche der keilförmigen Elemente 11.12 angreifen eine zylindrische Mantelfläche darstellt, die dort keinen Vorsprung aufweist. Entsprechend ist die Klemmung lediglich durch einen Reibschluss gegeben. Zur Erhöhung der Haltekräfte der Klemmung kann eine oder beide Oberflächen, beispielsweise die zylindrische Mantelfläche und / oder die konkaven Bereiche der keilförmigen Elemente 11.12 aufgeraut sein. Insbesondere können zu diesem Zweck eine Rändelung oder eine andere aufgeraute Oberflächenstruktur vorgesehen sein.

Die Justierung kann so stufenlos fein ausgeführt werden. Im Übrigen ist in diesem Zustand der Rotor 20 relativ zum Stator 10 nicht mehr drehbar. Der Drehgeber kann dementsprechend sicher transportiert werden, ohne dass der werksseitig festgelegte axiale Abstand dejustiert werden würde.

Im Zuge des Anbaus des Drehgebers an einen Motor wird zunächst die Motorwelle in die Hohlwelle 21 des Drehgebers eingeführt. Als nächstes wird dann das Gehäuse 11 am Gehäuse des Motors befestigt, indem Schrauben durch die Bohrungen 11.11, 11.21 gesteckt werden und in entsprechende Gewindebohrungen im Gehäuse des Motors gedreht werden.

Als nächstes wird die Hohlwelle 21 an der Motorwelle festgelegt. Zu diesem Zweck sind am Drehgeber ein Ringkörper 24 mit einer konischen Innenfläche 24.3 und ein Sprengring 22 vorgesehen, wobei der Sprengring 22 zwischen der Außenfläche 21.22 des Stegs 21.2 und der Innenfläche 24.3 des Ringkörpers 24 angeordnet ist, und hier insbesondere in der Nut 21.21 einrastet. Durch den Sprengring 22 kann mittig eine geometrische Fläche aufgespannt werden, die von der Achse A orthogonal durchstoßen wird. Diese Ebene wird im Folgenden als Querschnitt Q bezeichnet.

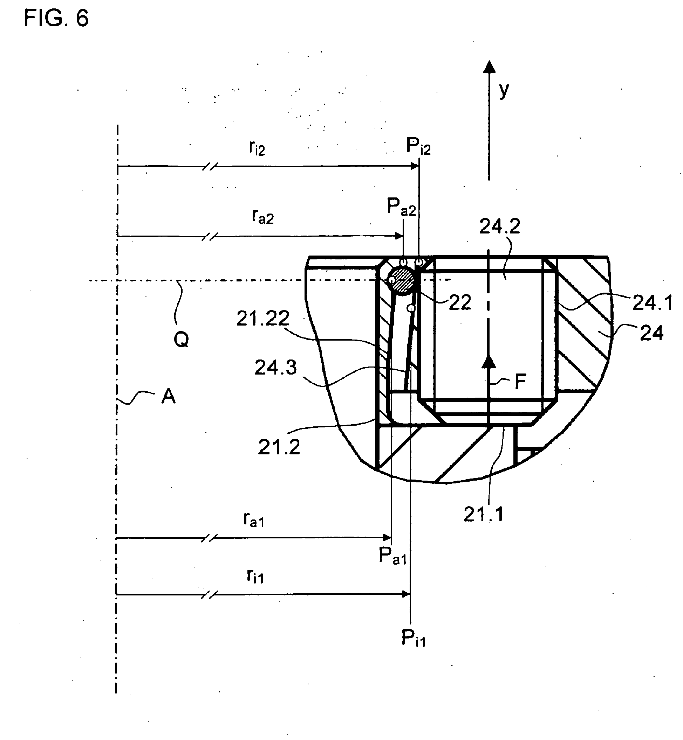

Konstruktiv ist gemäß der Figur 6 eine geometrische Anordnung geschaffen worden, bei der sowohl Punkte Pᵢ₁, Pᵢ₂ auf der Innenfläche 24.3 des Ringkörpers 24 als auch Punkte Pₐ₁, Pₐ₂ auf der Außenfläche 21.22 der Hohlwelle 21, bzw. des Stegs 21.2 definierbar sind, die unterschiedliche Abstände rᵢ₁, rᵢ₂; rₐ₁, rₐ₂ zur Achse A aufweisen. Wie bereits erwähnt, kann durch den Sprengring 22 ein ebener Querschnitt Q gelegt werden, wobei in der Ebene des Querschnitts Q ein der erste Punkt Pₐ₁ auf der Außenfläche 21.22 der Welle 21 zu liegen kommt, bzw. definierbar ist.

Ausgehend vom Querschnitt Q des Sprengrings 22 in einer Richtung entgegen der y-Richtung (-y, also in der Figur 6 nach unten) ist auf der Innenfläche 24.3 des Ringkörpers 24 ein virtueller geometrischer erster Punkt Pᵢ₁ definierbar. Dagegen sind in y-Richtung (in der Figur 6 nach oben) ein zweiter Punkt Pᵢ₂ auf der Innenfläche 24.3 und zweiter Punkt Pₐ₂ auf der Außenfläche 21.22 definierbar, bzw. angeordnet. Der radiale Abstand rᵢ₁ des ersten Punkts Pᵢ₁ auf der Innenfläche 24.3 zur Achse A ist kleiner als der Abstand rᵢ₂ des zweiten Punkts Pᵢ₂ auf der Innenfläche 24.3 zur Achse A. Darüber hinaus ist auch der Abstand rₐ₁ des ersten Punkts Pₐ₁ auf der Außenfläche 21.22 zur Achse A kleiner ist als der Abstand rₐ₂ des zweiten Punkts Pₐ₂ auf der Außenfläche 21.22 zur Achse A.

Im Zuge der Montage werden Gewindestifte 24.2 in Gewindebohrungen 24.1 des Ringkörpers 24 gedreht, so dass sich der Ringkörper 24 durch die Gewindestifte 24.2 auf dem Absatz 21.1 abstützt. Dadurch wird in den Ringkörper 24 eine Reaktionskraft F in eine Richtung y, welche hier parallel zur Achse A orientiert ist, eingeleitet. Der Ringkörper 24 bewegt sich in y-Richtung und drückt auf den Sprengring 22 in der Nut 21.21. Dabei wirkt eine radial nach innen gerichtete Kraft und der Steg 21.2 wird radial nach innen gedrückt, so dass die in die Hohlwelle 21 eingeführte Motorwelle drehfest geklemmt ist. Durch diese Klemmung ist auch eine axiale Festlegung der Hohlwelle 21 an der Motorwelle gegeben. Dabei werden konstruktionsbedingt sehr hohe Klemmkräfte erreicht, weil einerseits die Nut 21.21 weit beabstandet vom Absatz 21.1 also vom Ansatz bzw. der Wurzel des Stegs 21.2 liegt und andererseits durch die konische Ausgestaltung des Stegs 21.2 dieser am Ansatz sehr dünnwandig ausgestaltet ist. Entsprechend werden hohe Biegemomente über denn Sprengring 22 eingeleitet, bei einem vergleichsweise kleinen Widerstandsmoment des Stegs 21.2. Das Widerstandsmoment des Stegs 21.2 wird zusätzlich noch durch die Schlitze 21.23 reduziert, welche in Umfangsrichtung versetzt parallel zur Achse A ausgerichtet sind.

Nachdem nun der Stator 10 am Gehäuse des Motors und der Rotor 20 an der Motorwelle festgelegt sind, kann die Arretierung, die zur Einhaltung des werkseitig justierten axialen Abstands zwischen der Codescheibe 23 und der Leiterplatte 13 vorgenommen wurde, gelöst werden. Dies geschieht dadurch, dass der Klemmring 12 entgegen dem Uhrzeigersinn relativ zum Gehäuse 11 gedreht wird. Somit werden die Nocken 12.2 in die verjüngten Bereiche der keilförmigen Elemente 11.12 gebracht und die Klemmung zwischen dem ersten Gehäuseteil 11.1 und der Hohlwelle 21 wird wieder gelöst. Der Luftspalt s ist in dieser Stellung größer als Null, und der Messbetrieb kann aufgenommen werden.

## Patentansprüche

1. Drehgeber umfassend eine erste Bauteilgruppe (10) und eine zweite Bauteilgruppe (20), wobei die Bauteilgruppen (10, 20) relativ um eine Achse (A) zueinander drehbar angeordnet sind, und
die erste Bauteilgruppe (10) eine Detektoranordnung (13) umfasst, die zweite Bauteilgruppe (20)
• eine Codescheibe (23),
• eine Welle (21) mit einer zentralen Bohrung, einen Absatz • (21.1) und einen Steg (21.2) mit einer Außenfläche (21.22),
• einen Ringkörper (24) mit einer Innenfläche (24.3) und einem Betätigungsmittel (24.1, 24.2), sowie
• ein Bauteil (22), welches zwischen der Außenfläche (21.22) und der Innenfläche (24.3) des Ringkörpers (24) angeordnet ist,
umfasst, wobei
die Codescheibe (23) von der Detektoranordnung (13) zur Bestimmung der relativen Winkellage der beiden Bauteilgruppen (10, 20) zueinander abtastbar ist,
sowohl Punkte (Pᵢ₁, Pᵢ₂) auf der Innenfläche (24.3) des Ringkörpers (24) als auch Punkte (Pₐ₁, Pₐ₂) auf der Außenfläche (21.22) der Welle (21) unterschiedliche Abstände (rᵢ₁, rᵢ₂; rₐ₁, rₐ₂) zur Achse (A) aufweisen, so dass
durch das Betätigungsmittel (24.1, 24.2) sich der Ringkörper (24) derart auf dem Absatz (21.1) abstützt, dass über das Bauteil (22) eine Kraft mit einer radialen Richtungskomponente auf den Steg (21.2) einwirkt, so dass ein in die Bohrung der Welle (21) eingeführtes Maschinenteil klemmbar ist.

2. Drehgeber gemäß dem Anspruch 1, wobei durch das Betätigungsmittel (24.1, 24.2) sich der Ringkörper (24) derart auf dem Absatz (21.1) abstützt, dass in den Ringkörper (24) eine Reaktionskraft (F) in eine Richtung (y), welche eine Richtungskomponente parallel zur Achse (A) aufweist, eingeleitet wird, und das Bauteil (22) einen Querschnitt (Q) aufweist, wobei in der Ebene des Querschnitts (Q) ein erster Punkt (Pₐ₁) auf der Außenfläche (21.22) der Welle (21) definierbar ist, und ausgehend vom Querschnitt (Q) weiterhin
entgegen der y-Richtung ein erster Punkt (Pᵢ₁) auf der Innenfläche (24.3) des Ringkörpers (24) definierbar ist,
in y-Richtung ein zweiter Punkt (Pᵢ₂) auf der Innenfläche (24.3) und ein zweiter Punkt (Pₐ₂) auf der Außenfläche (21.22) definierbar sind, und
der Abstand (rᵢ₁) des ersten Punkts (Pᵢ₁) auf der Innenfläche (24.3) zur Achse (A) kleiner ist als der Abstand (rᵢ₂) des zweiten Punkts (Pᵢ₂) auf der Innenfläche (24.3) zur Achse (A) und
der Abstand (rₐ₁) des ersten Punkts (Pₐ₁) auf der Außenfläche (21.22) zur Achse (A) kleiner ist als der Abstand (rₐ₂) des zweiten Punkts (Pₐ₂₎ auf der Außenfläche (21.22) zur Achse (A).

3. Drehgeber gemäß dem Anspruch 1 oder 2, wobei das Bauteil (22) ein Sprengring ist.

4. Drehgeber gemäß einem der vorhergehenden Ansprüche, wobei die Welle (21) eine Nut (21.21) zur Abstützung des Bauteils (22) aufweist.

5. Drehgeber gemäß einem der vorhergehenden Ansprüche, wobei die Außenfläche (21.22) der Welle (21) konisch ausgestaltet ist.

6. Drehgeber gemäß einem der vorhergehenden Ansprüche, wobei die Innenfläche (24.3) des Ringkörpers (24) konisch ausgestaltet ist.

7. Drehgeber gemäß einem der vorhergehenden Ansprüche, wobei der Drehgeber nach einem induktiven Messprinzip arbeitet.

8. Drehgeber gemäß dem Anspruch 7, wobei die Detektoranordnung (13) als eine Leiterplatte ausgestaltet ist mit Erreger- und Empfängerleiterbahnen.

9. Drehgeber gemäß dem Anspruch 7, wobei die Codescheibe (23) alternierend angeordnete, elektrisch leitfähige und nichtleitfähige Teilungsbereichen aufweist.

## Claims

1. A rotary transducer comprising a first component group (10) and a second component group (20), wherein the component groups (10, 20) are arranged so as to be capable of being rotated about an axis (A) relative to one another and
the first component group (10) comprises a detector arrangement (13),
the second component group (20) comprises
- a code disk (23)
- a shaft (21) comprising a central bore, a shoulder (21.1) and a bar (21.2) comprising an outer surface (21.22),
- a ring body (24) comprising an inner surface (24.3) and an activating means (24.1, 24.2) as well as
- a component (22), which is arranged between the outer surface (21.22) and the inner surface (24.3) of the ring body (24),
wherein
the code disk (23) can be scanned by the detector arrangement (13) for determining the relative angular position of the two component groups (10, 20) to one another,
points (Pᵢ₁, Pᵢ₂) on the inner surface (24.3) of the ring body (24) as well as points (Pₐ₁, Pₐ₂) on the outer surface (21.22) of the shaft (21) encompass different distances (rᵢ₁, rᵢ₂; rₐ₁, rₐ₂) to the axis (A) so that the ring body (24) is supported on the shoulder (21.1) in such a manner by means of the activating means (24.1, 24.2) that a force comprising a radial directional component acts on the bar (21.2) via the component (22) so that a machine part inserted into the bore of the shaft (21) can be clamped.

2. The rotary transducer according to claim 1, wherein the ring body (24) is supported on the shoulder (21.1) by means of the activating means (24.1, 24.2) in such a manner that a reaction force (F) is introduced into the ring body (24) in a direction (y), which encompasses a directional component parallel to the axis (A) and the component (22) encompasses a cross section (Q), wherein, in the plane of the cross section (Q), a first point (Pₐ₁) can be defined on the outer surface (21.22) of the shaft (21) and, based on the cross section (Q), furthermore
a fist point (Pᵢ₁) can be defined on the inner surface (24.3) of the ring body (24) opposite the y-direction,
a second point (Pᵢ₂) can be defined on the inner surface (24.3) and a second point (Pₐ₂) can be defined on the outer surface (21.22) in y-direction and
the distance (rᵢ₁) of the first point (Pᵢ₁) on the inner surface (24.3) to the axis (A) is smaller than the distance (rᵢ₂) of the second point (Pᵢ₂) on the inner surface (24.3) to the axis (A) and
the distance (rₐ₁) of the first point (Pₐ₁) on the outer surface (21.22) to the axis (A) is smaller than the distance (rₐ₂) of the second point (Pₐ₂) on the outer surface (21.22) to the axis (A).

3. The rotary transducer according to claim 1 or 2, wherein the component (22) is a snap ring.

4. The rotary transducer according to one of the preceding claims, wherein the shaft (21) encompasses a groove (21.21) for supporting the component (22).

5. The rotary transducer according to one of the preceding claims, wherein the outer surface (21.22) of the shaft (21) is embodied in a conical manner.

6. The rotary transducer according to one of the preceding claims, wherein the inner surface (24.3) of the ring body (24) is embodied in a conical manner.

7. The rotary transducer according to one of the preceding claims, wherein the rotary transducer operates according to an inductive measuring principle.

8. The rotary transducer according to claim 7, wherein the detector arrangement (13) is embodied as a printed circuit board comprising exciter and receiver strip conductors.

9. The rotary transducer according to claim 7, wherein the code disk (23) encompasses electrically conductive and non-conductive grating areas, which are arranged in an alternating manner.

## Revendications

1. Capteur de rotation comprenant un premier groupe de composants (10) et un deuxième groupe de composants (20), dans lequel les groupes de composants (10, 20) sont disposés de façon rotative les uns par rapport aux autres autour d'un axe (A), et
le premier groupe de composants (10) comprend un dispositif détecteur (13),
le deuxième groupe de composants (20) comprend
• un disque de codage (23),
• un arbre (21) avec un perçage central, un gradin (21.1) et une barrette (21.2) avec une surface extérieure (21.22),
• un corps annulaire (24) avec une surface intérieure (24.3) et un moyen d'actionnement (24.1, 24.2), ainsi que
• un composant (22) disposé entre la surface extérieure (21.22) et la surface intérieure (24.3) du corps annulaire (24),
dans lequel
le disque de codage (23) est susceptible d'être exploré par le dispositif détecteur (13) pour la détermination de la position d'angle relative des deux groupes de composants (10, 20) l'un par rapport à l'autre,
aussi bien les points (Pᵢ₁, Pᵢ₂) sur la surface intérieure (24.3) du corps annulaire (24) que les points (Pₐ₁, Pₐ₂) sur la surface extérieure (21.22) de l'arbre (21) présentent des écarts différents (rᵢ₁, rᵢ₂, rₐ₁, rₐ₂) par rapport à l'axe (A), de sorte que
sous l'effet du moyen d'actionnement (24.1, 24.2), le corps annulaire (24) s'appuie de telle manière sur le gradin (21.1), qu'une force avec une composante de direction radiale agit sur le gradin (21.2) par le biais du composant (22), de façon à pouvoir serrer une pièce de machine introduite dans le perçage de l'arbre (21).

2. Capteur de rotation selon la revendication 1, dans lequel, sous l'effet du moyen d'actionnement (24.1, 24.2), le corps annulaire (24) s'appuie de telle manière sur le gradin (21.1), qu'une force de réaction (F) est introduite dans le corps annulaire (24), dans une direction (y) présentant une composante de direction parallèle à l'axe (A), et le composant (22) présente une section transversale (Q), un premier point (Pₐ₁) pouvant être défini sur la surface extérieure (21.22) de l'arbre (21), sur le plan de la section transversale (Q), et de plus, à partir de la section transversale (Q),
un premier point (Pᵢ₁) peut être défini à l'encontre de la direction y, sur la surface intérieure (24.3) du corps annulaire (24),
un deuxième point (Pᵢ₂) sur la surface intérieure (24.3) et un deuxième point (Pₐ₂) sur la surface extérieure (21.22) peuvent être définis dans la direction y, et
l'écart (rᵢ₁) entre le premier point (Pᵢ₁) sur la surface intérieure (24.3) et l'axe (A) est inférieur à l'écart (rᵢ₂) entre le deuxième point (Pᵢ₂) sur la surface intérieure (24.3) et l'axe (A), et
l'écart (rₐ₁) entre le premier point (Pₐ₁) sur la surface extérieure (21.22) et l'axe (A) est inférieur à l'écart (rₐ₂) entre le deuxième point (Pₐ₂) sur la surface extérieure (21.22) et l'axe (A).

3. Capteur de rotation selon l'une des revendications 1 ou 2, dans lequel le composant (22) est un jonc d'arrêt.

4. Capteur de rotation selon l'une des revendications précédentes, dans lequel l'arbre (21) comporte une rainure (21.21) pour l'appui du composant (22).

5. Capteur de rotation selon l'une des revendications précédentes, dans lequel la surface extérieure (21.22) de l'arbre (21) est conçue de façon conique.

6. Capteur de rotation selon l'une des revendications précédentes, dans lequel la surface intérieure (24.3) du corps annulaire (24) est conçue de façon conique.

7. Capteur de rotation selon l'une des revendications précédentes, dans lequel le capteur de rotation travaille selon un principe de mesure inductif.

8. Capteur de rotation selon la revendication 7, dans lequel le dispositif détecteur (13) est conçu comme une plaque à circuits imprimés, avec des pistes conductrices d'excitation et des pistes conductrices de réception.

9. Capteur de rotation selon la revendication 7, dans lequel le disque de codage (23) comporte des zones séparatrices électriquement conductrices et non conductrices disposées en alternance.
